# EUROPEAN PATENT SPECIFICATION

(11) **EP 3 594 418 B1**
(45) Date of publication and mention of the grant of the patent: **29.06.2022**
(21) Application number: 19185575.8
(22) Date of filing: 10.07.2019
(51) Int. Cl.: E03C 1/18, A47J 47/00, A47J 47/20

(54) **WATER SINK HAVING BRACKETS**
SPÜLBECKEN MIT KONSOLEN
ÉVIER AYANT DES SUPPORTS

(30) Priority: 11.07.2018 CN 201821092597 U; 11.06.2019 CN 201910500787
(43) Date of publication of application: 15.01.2020
(73) Proprietor: Ningbo Mengo Kitchen Equipment Co., Ltd., Ningbo (CN)
(72) Inventor: MEI, Haibin, Ningbo (CN)
(74) Representative: 2K Patentanwälte Blasberg Kewitz & Reichel

(56) References cited:
- EP-A2- 1 555 352
- US-A- 454 552
- US-A1- 2010 275 369

## Description

### Technical Field

The present invention relates to the field of water sink technology, and more particularly to a water sink and a washing machine having the same.

### Background

The water sink is an indispensable part of every family kitchen. The vast majority of the existing water sinks are ordinary sinks which usually have two large and one small tanks for washing dishes and vegetables. The frequently used cutting boards, washing baskets, drain baskets, etc., are placed separately on a table top. This takes up a large space in the kitchen, and also makes the kitchen messy and untidy. US 454 552 discloses a cutting and draining board with a drip pan, and provides the basis for the two-part form of claim 1.

### Summary

The technical problem to be solved by the present invention is to provide a water sink having a storage structure, which can increase the storage capacity of the water sink and can store a cutting board, a drain basket, and the like within the water sink. The drained water directly flows into the water sink to keep the kitchen table clean.

The technical solution of the present invention provides a water sink comprising a water sink body. Each of two opposite inner walls of the water sink body has a baffle, and both ends of the baffle are fixedly connected to the inner walls of the water sink body.

With the above structure, the water sink of the present invention has the following advantages compared to prior arts:
Since the opposite inner walls of the water sink body of the present invention are provided with a baffle, the two baffles can be used for arranging a cutting board, a drain basket, a drain board and the like. The cutting board can be drained directly in the water sink. Washed fruits, vegetables, etc., can also be placed directly in the drain basket or drain plate in the water sink for draining. Thus it allows keeping the tabletops clean and dry, and convenient for users and avoids wetting the tabletops.

A space is left between the baffle and the corresponding inner wall of the water sink body. By adopting such a structure, the space between the baffle and the inner wall of the water sink can be used for inserting tools, hanging hooks and the like, which is more convenient for the user and further enhances the storage capacity of the water sink.

In a preferred embodiment, a slot for inserting a cutting board is formed between one end or both ends of the baffle and the side wall of the water sink body adjacent to an end surface of the one end or both ends. With this structure, the cutting board placed on the baffle can be inserted into the slot after use, and it is more convenient to store the cutting board.

In a preferred embodiment, each of a front inner wall and a rear inner wall of the water sink body comprises the baffle. Within such a structure, the baffles are arranged on the front and rear inner walls. It is more convenient for the user to use such a water sink.

In a preferred embodiment, both ends of the baffle and the corresponding inner wall of the water sink body are fixedly connected by a connecting member. This embodiment allows for a simple structure and easier connection.

In a preferred embodiment, the baffle is in a "U" shape, and both ends of the baffle are respectively fixedly connected to the corresponding inner walls of the water sink body through a locking member at each of these ends. This embodiment allows for one-piece molding, and more simple and reliable structure

In a preferred embodiment, the baffle comprises a support rod and a connecting portion respectively disposed at each end of the support rod, the connecting portion is fixedly connected to the inner wall of the water sink body, a corner is arranged between the end of the support rod and the connecting portion, the outer side of the corner is a curved surface, and the inner side of the corner is a right angle. With this structure, the outer side of the corner is a curved surface to avoid injuring people.

In a preferred embodiment, the baffle comprises a support rod and a connecting portion respectively disposed at each end of the support rod, the connecting portion is fixedly connected to the inner wall of the water sink body, the connecting portion is perpendicular to an end of the support rod, a side surface of the support rod away from the connecting portion comprises a protrusion, a cross section of the protrusion is in a triangular shape, and each of the both ends of the protrusion has a triangular slope. With such a structure, the cross section of the protrusion would have a triangular shape, which can effectively reduce the volume of the baffle and increase the internal space of the water sink.

In a preferred embodiment, both ends of the baffle are arched surfaces, the baffle includes a support rod and a connecting portion provided at both ends of the support rod, the connecting portion is fixedly connected to the inner wall of the water sink body, and the connecting portion is perpendicular to the end of the support rod. With this structure, the two ends of the baffle would have curved surfaces to avoid injuring people.

In a preferred embodiment, the baffle comprises a support rod and a connecting portion respectively disposed at each end of the support rod, the connecting portion is fixedly connected to the inner wall of the water sink body, a corner is arranged between the end of the support rod and the connecting portion, the outer side of the corner is a slope, and the inner side of the corner is a right angle. After adopting such a structure, the outer side of the corner is a slope, which can effectively reduce the volume of the baffle and increase the internal space of the water sink.

In a preferred embodiment, the baffle comprises a support rod, each of the both ends of the support rod adjacent to the corresponding side wall of the inner wall of the water sink body comprises a connecting portion, and the connecting portion is detachably connected to the inner wall of the water sink body. Disassembly and assembly of the baffles can be performed according to the needs of users. The use of the baffle may be more flexible and convenient

In a preferred embodiment, the connecting portion has a socket on a side of the inner wall of the water sink body, the lower end of the socket has an opening, a socket block is disposed at a position on the inner wall of the water sink body corresponding to the socket, the support rod is suspended on the inner wall of the water sink body, and the socket is matched with the socket block. With such a structure, it is convenient to disassemble and the support rod.

In a preferred embodiment, the socket block has a dovetail shape in cross section, and the socket has a shape that matches the shape of the socket block.

In a preferred embodiment, each of the both ends of the support rod has an arched shape. This structure avoids injuring people

In a preferred embodiment, the baffle comprises a support rod, each of the both ends of the support rod adjacent to the corresponding side wall of the inner wall of the water sink body comprises a connecting portion, and the connecting portion is fixedly connected to the inner wall of the water sink body.

In a preferred embodiment, the baffle comprises a support rod, both ends of the support rod are fixed to the inner wall of the water sink body, and a gasket is disposed between the end of the support rod and the inner wall of the water sink body. Another technical problem to be solved by the present invention is to provide a sink-type washing machine comprising a water sink having a storage function, which can store a cutting board, a drain basket, and the like within, and the drained water directly flows into the water sink to keep the kitchen table clean and tidy.

The technical solution of the present invention further provides a sink-type washing machine comprising the water sink of any one of the embodiments and a washer. The water sink is integrated with the washer.

With the above structure, the water sink of the present invention has the following advantages as compared with the prior art: Since the sink-type washing machine of the present invention integrates a water sink and the opposite inner walls of the water sink body of the water sink may each comprise a baffle, the two baffles can be used for arranging a cutting board, a drain basket and a drain board. The cutting board can be washed directly in the water sink. The washed fruits and vegetables can also be directly placed in the drain basket or the drain board in the water sink for draining, so as to avoid wetting the tabletops and keep the tabletops clean and dry. It is more convenient for users to use.

In a preferred embodiment, the washing machine is a dishwasher or a fruit and vegetable washing machine

### Brief Description of the drawings

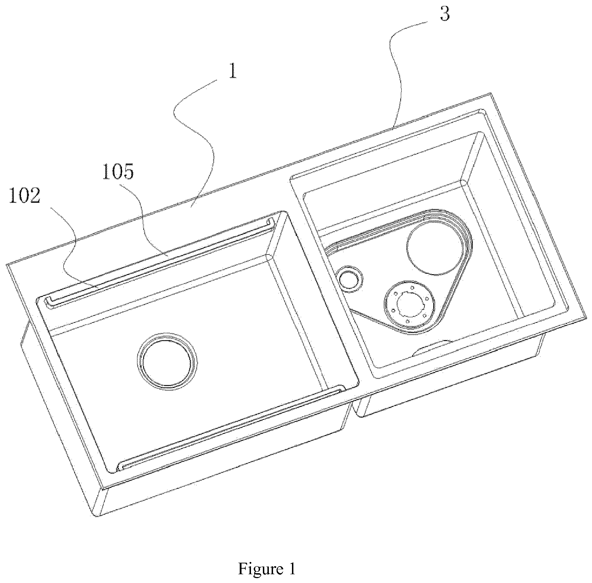

Fig. 1 is a schematic view showing the structure of a sink-type washing machine in accordance with a first embodiment of the present invention.

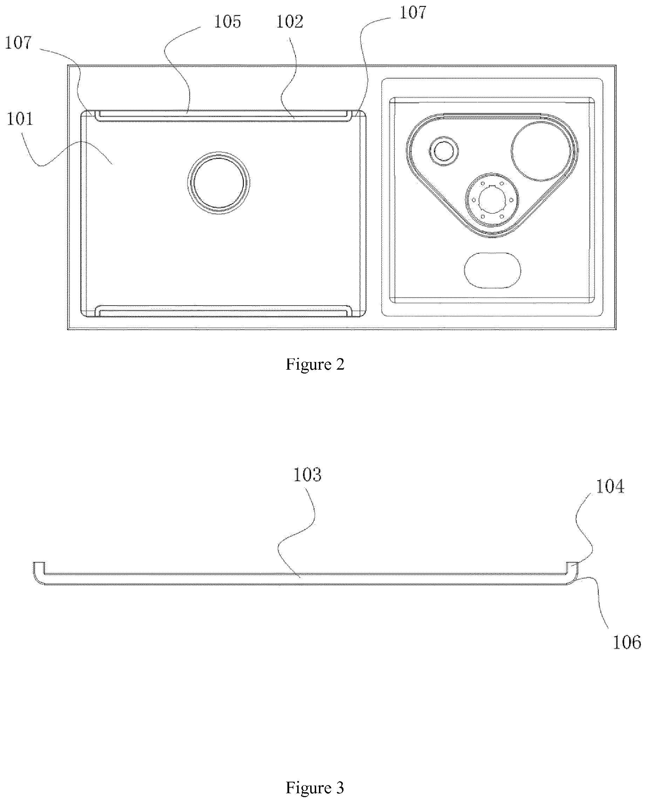

Fig. 2 is a schematic plan view showing the structure of the sink-type washing machine in accordance with a first embodiment of the present invention.
Fig. 3 is a schematic view showing the structure of a baffle of the sink-type washing machine according to a first embodiment of the present invention.

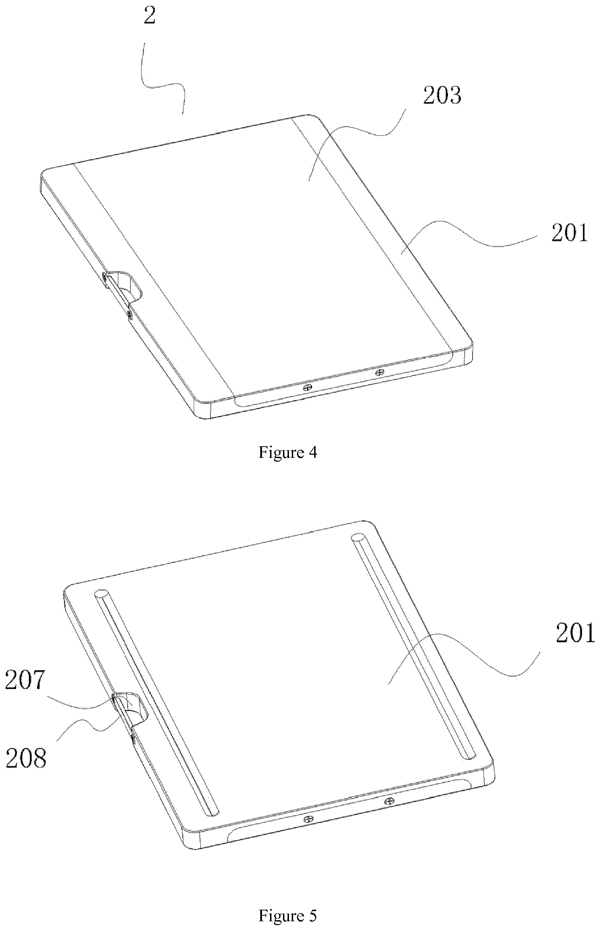

Fig. 4 is a perspective view showing the structure of a cutting board of the sink-type washing machine according to a first embodiment of the present invention.
Fig. 5 is a perspective view showing the other side of the cutting board of the sink-type washing machine in accordance with the first embodiment of the present invention.

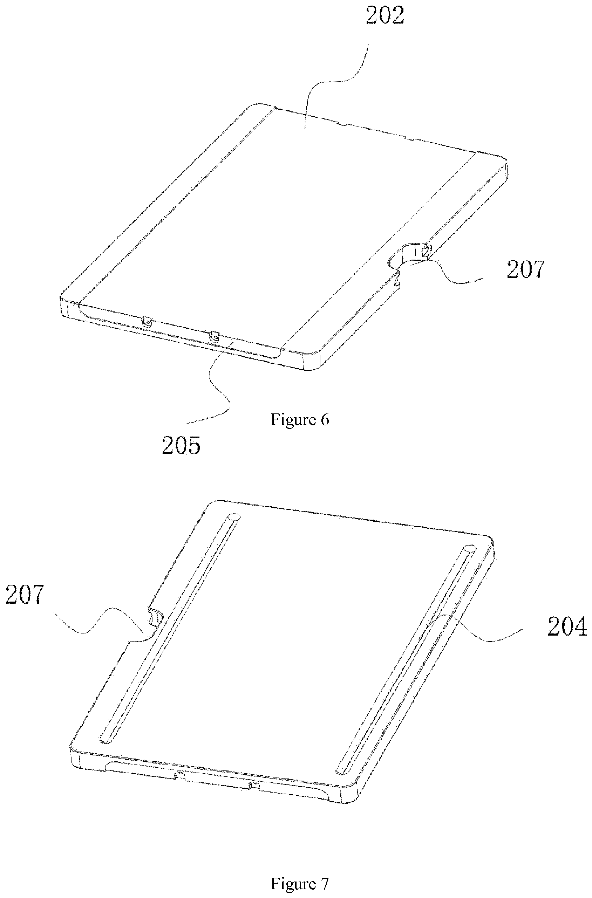

Fig. 6 is a perspective view showing the structure of the cutting board of the sink-type washing machine of the first embodiment of the present invention with a panel removed.
Fig. 7 is a perspective view showing another perspective of the cutting board of the sink-type washing machine of the first embodiment of the present invention with the panel removed.

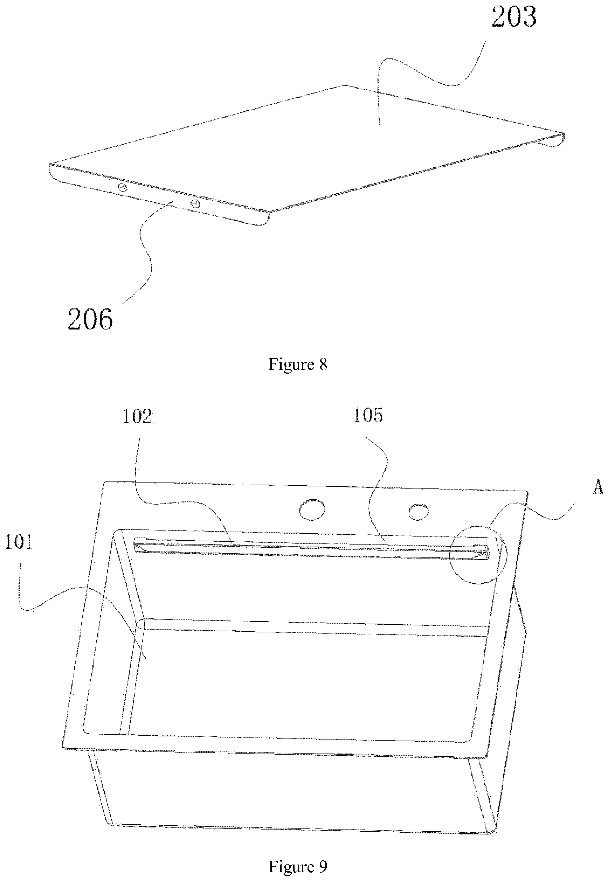

Fig. 8 is a perspective view showing the structure of a panel of a cutting board of a sink type washing machine according to a first embodiment of the invention.
Fig. 9 is a perspective view showing the structure of a water sink according to a second embodiment of the present invention.

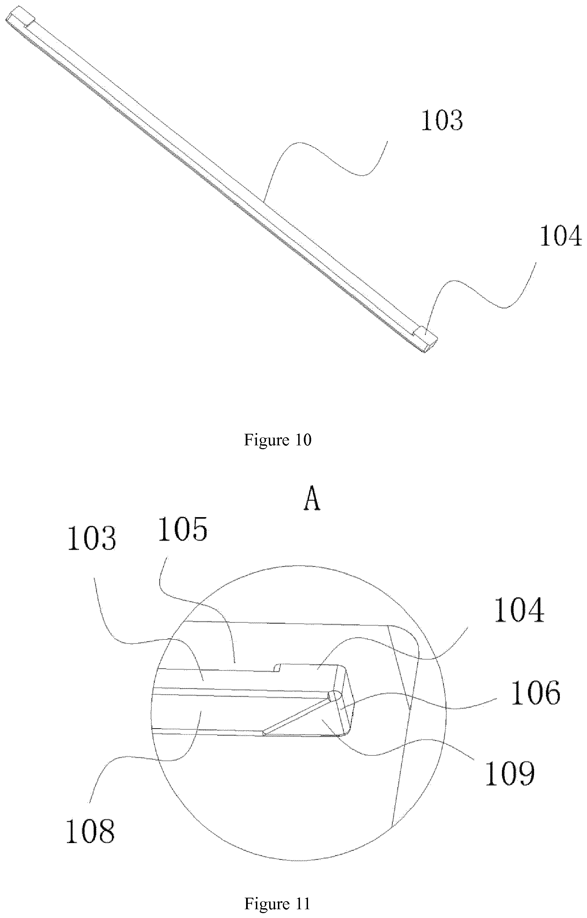

Figure 10 is a perspective view showing the structure of a baffle of the water sink of the second embodiment of the present invention.
Figure 11 is an enlarged schematic view of a portion A of Figure 9.

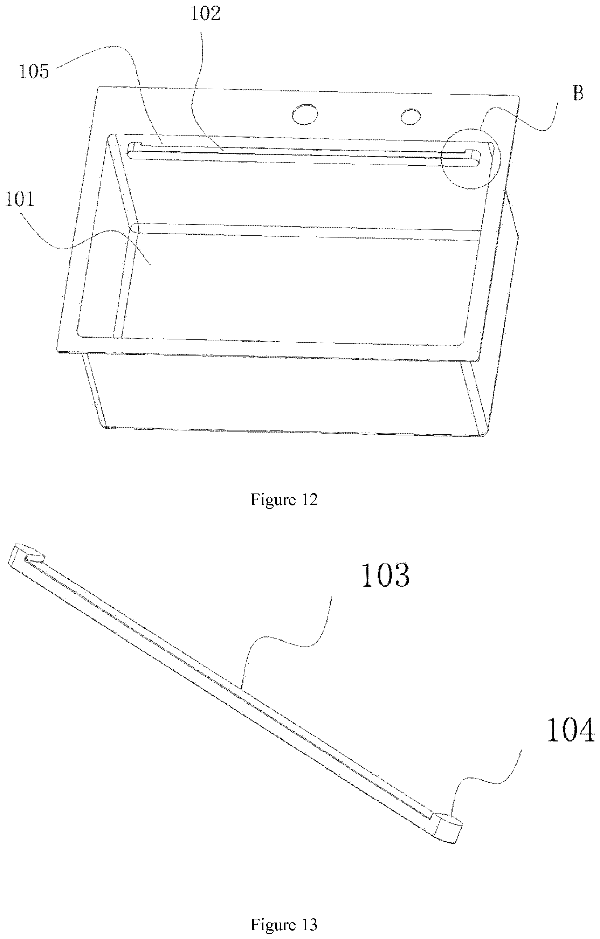

Figure 12 is a perspective view showing the structure of a water sink according to a third embodiment of the present invention.
Figure 13 is a perspective view showing the structure of a baffle of the water sink of the third embodiment of the present invention.

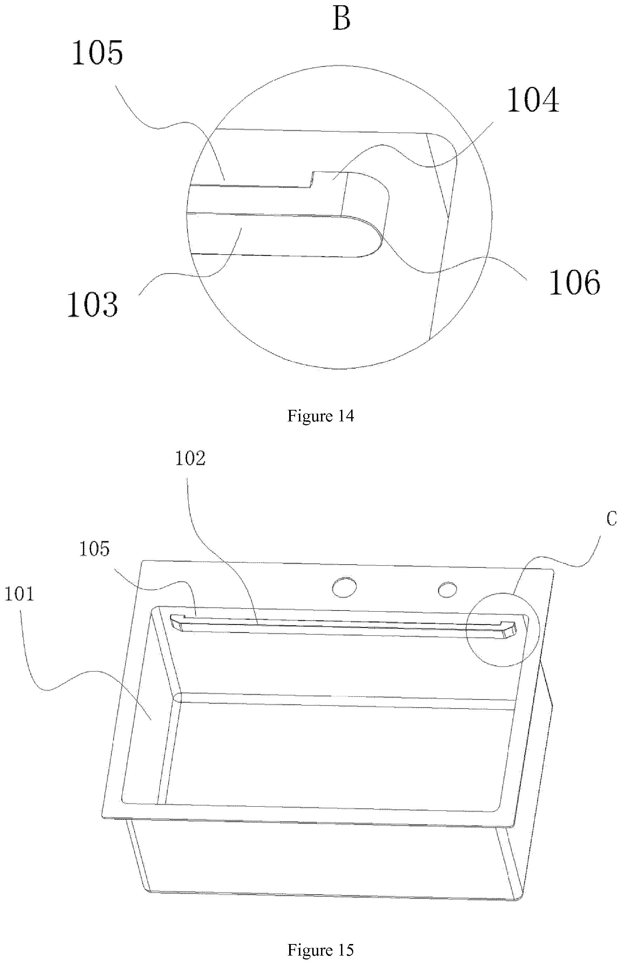

Figure 14 is a schematic enlarged view of a portion B of Figure 12.
Figure 15 is a perspective view showing the structure of a water sink according to a fourth embodiment of the present invention.

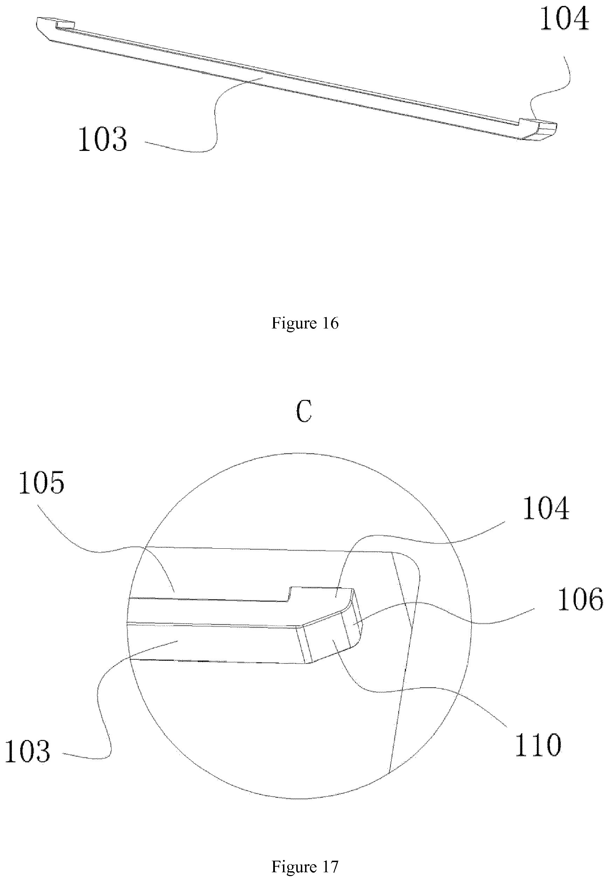

Figure 16 is a perspective view showing the structure of the baffle of a water sink of the fourth embodiment of the present invention.
Figure 17 is a schematic enlarged view showing a portion C of Figure 15.

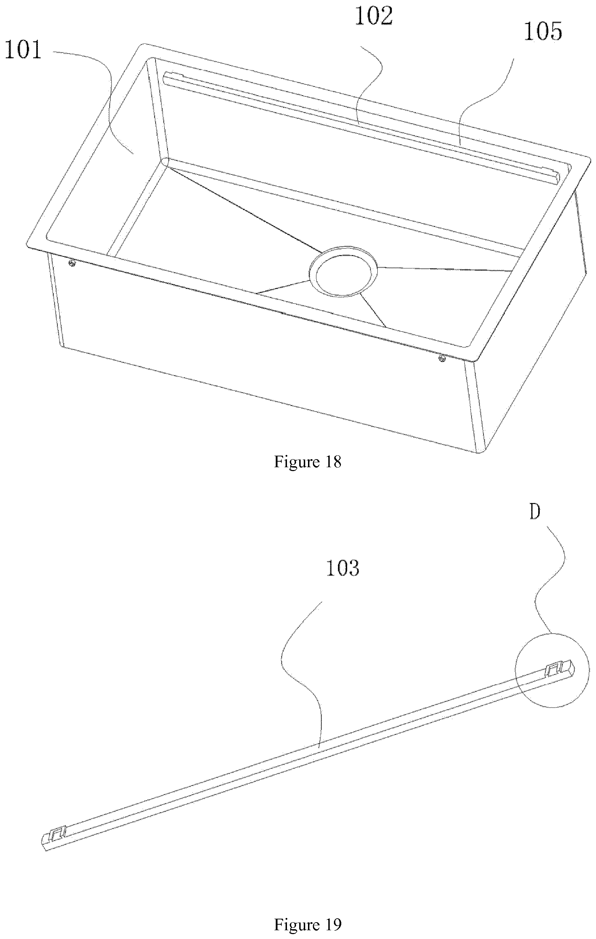

Figure 18 is a perspective view showing the structure of a water sink according to a fifth embodiment of the present invention.
Figure 19 is a perspective view showing the structure of the baffle of a water sink of the fifth embodiment of the present invention.

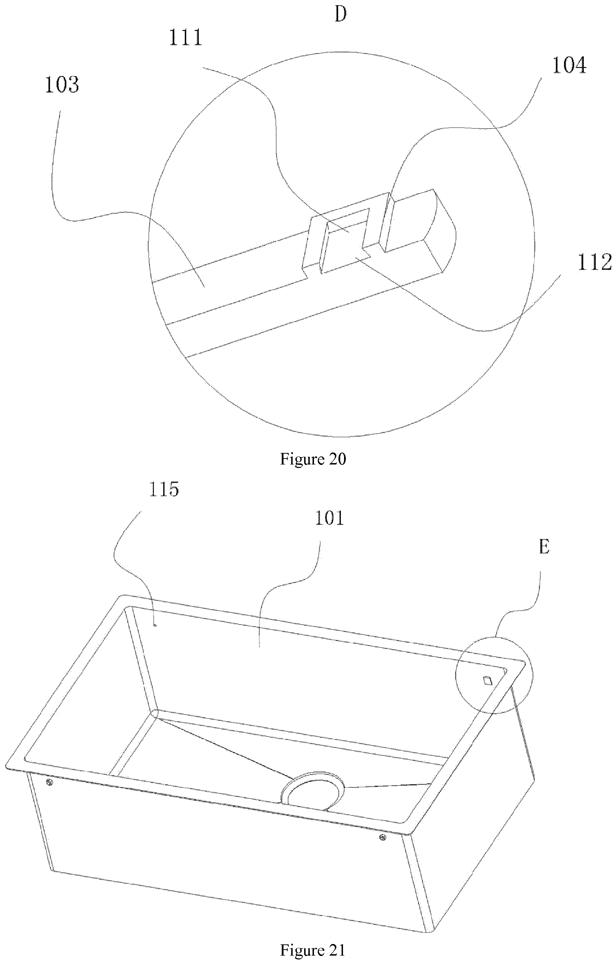

Figure 20 is a schematic enlarged view of a portion D of Figure 19.
Figure 21 is a perspective view showing the structure of the water sink of the fifth embodiment of the present invention with the baffle removed.

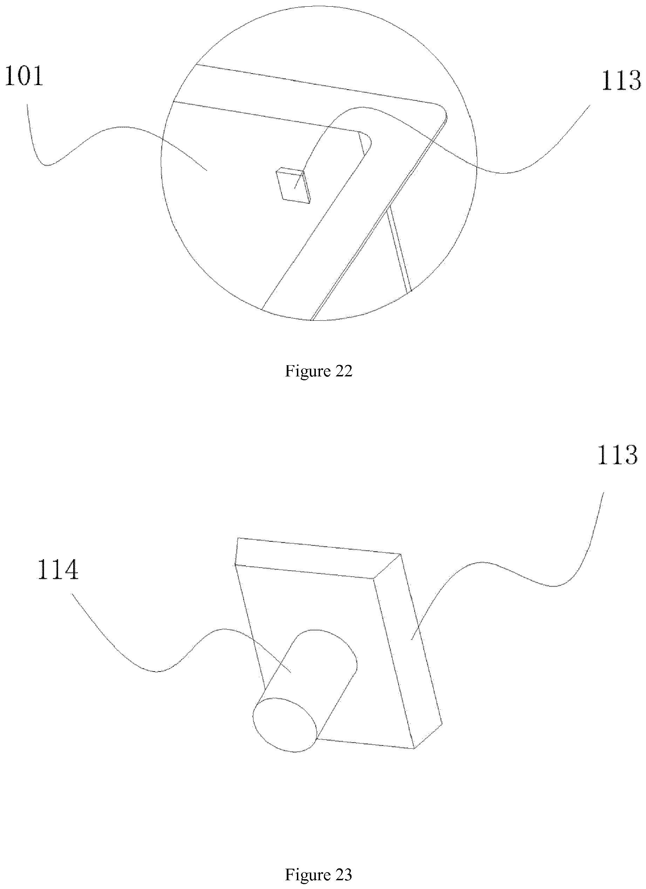

Figure 22 is a schematic enlarged view of the portion E of Figure 21.
Figure 23 is a perspective view showing the structure of a plug block of a water sink according to a fifth embodiment of the present invention.

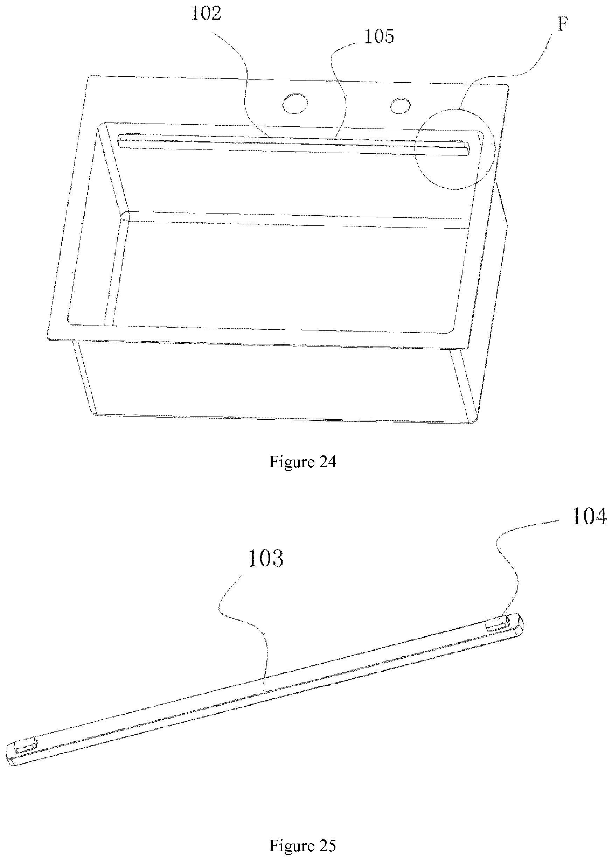

Figure 24 is a perspective view showing the structure of a water sink according to a sixth embodiment of the present invention.
Figure 25 is a perspective view showing the structure of a water sink of the sixth embodiment of the present invention.

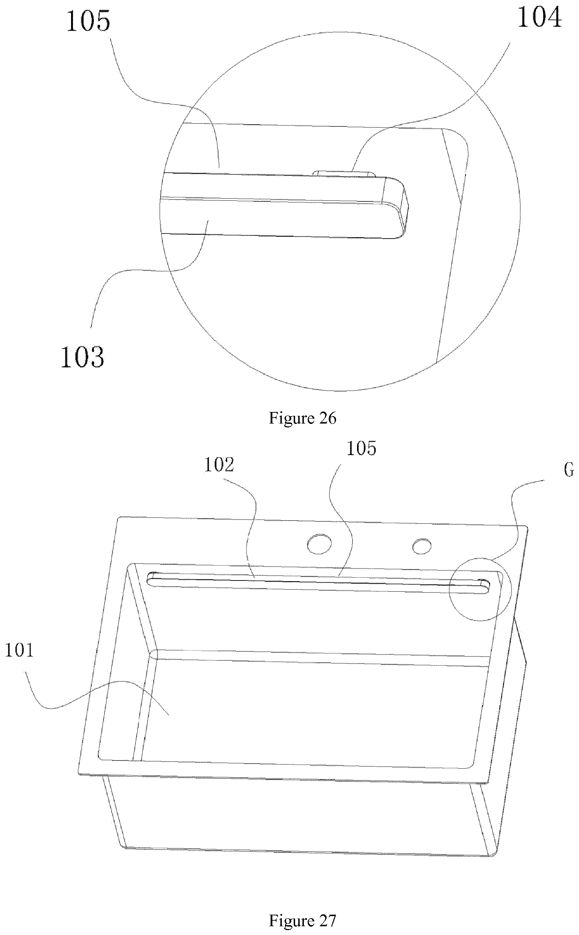

Figure 26 is an enlarged schematic view showing a portion F of Figure 15.
Figure 27 is a perspective view showing the structure of a water sink according to a seventh embodiment of the present invention.

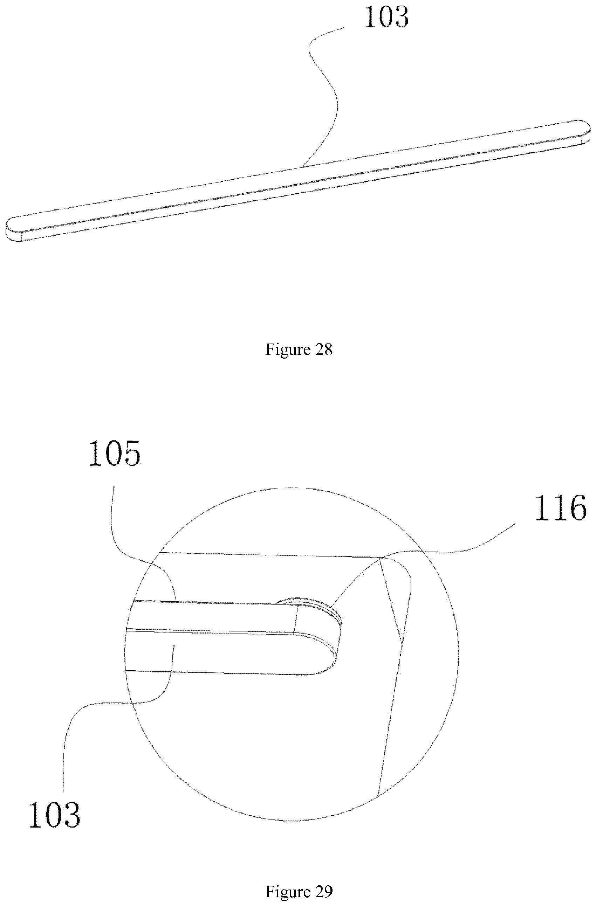

Figure 28 is a perspective view showing the structure of a water sink of the seventh embodiment of the present invention.
Figure 29 is a schematic enlarged view showing a portion G of Figure 15.

Reference numbers: 1. water sink, 101, water sink body, 102, baffle, 103, support rod, 104, connecting portion, 105, space, 106, corner, 107, slot, 108, protrusion, 109, triangular slope, 110, slope, 111, socket, 112, opening, 113, socket block, 114, screw rod, 115, mounting hole, 116, gasket, 2, cutting board, 201, cutting board body, 202, embedded slot, 203, panel, 204, groove, 205, extension groove, 206, bent portion, 207, handle groove, 208, handle, 3, washer.

### Detailed Description

For a better understanding of the present application, various aspects of the present application will be described in more detail with reference to the accompanying drawings. It should be understood that the detailed description is only illustrative of the exemplary embodiments of the present application, and is not intended to limit the scope of the application. Throughout the specification, the same drawing reference numerals refer to the same elements.

In the drawings, the thickness, size, and shape of the object have been somewhat exaggerated for convenience of explanation. The drawings are only examples and not strictly drawn to scale.

It will also be understood that the terms "comprising", "including", "having", "encompassing", when used in the specification, suggest presence of the described features, integers, steps, operations, components, parts, but does not exclude the presence or addition of one or more other features, integers, steps, operations, components, parts and/or combinations thereof. Moreover, when expressions such as "at least two" appear after the list of listed features, the entire listed features are defined instead of the individual elements in the list.

### 1^{st} Embodiment:

The present invention discloses a water sink 1 which includes a water sink body 101. The front inner wall and the rear inner wall of the water sink body 101 are each provided with a baffle 102, and the upper planes of both the front and rear bars 102 are aligned.

The baffle 102 is in a "U" shape. The baffle 102 includes a support rod 103 and connecting portions 104 respectively disposed at each end of the support rod 103. The connecting portion 104 is fixedly connected to the corresponding inner wall of the water sink body 101. The inner wall of the water sink body 101 has a mounting hole (not shown) through which a screw is fixed to the end surface of the connecting portion 104. A sealing gasket (not shown) is disposed between the end surface of the connecting portion 104 and the inner wall of the water sink body 101 or/and between a nut of the screw and the outer wall of the water sink body 101, in order to prevent the mounting hole from a water leakage. Waterproof glue may be applied between the nut and the outer wall of the water sink body 101 to provide waterproofing. The connecting portion 104 may also be fixed to the inner wall of the water sink body 101 by welding.

A space 105 is left between the support rod 103 and the inner wall of the water sink body 101. The space 105 can be used to insert a tool, or to hang objects such as a drain rack, a hook, and the like.

A corner 106 is disposed between the end of the support rod 103 and the connecting portion 104. The outer side of the corner 106 is a curved surface, and the inner side of the corner 106 is a right angle. A slot 107 for inserting the cutting board is formed between the corner 106 and the inner wall of the adjacent water sink body 101. Therefore, a left slot is between the left end of the support rod 103 and the left side wall of the water sink body 101, and a right slot is between the right end of the support rod 103 and the right side wall of the water sink body 101. The width of the slot 107 matches the width of the cutting board 2. After the cutting board 2 is used, it can be inserted in the left slot or in the right slot. The minimum distance between the front and rear baffles 102 is less than the length of the cutting board 2 and the maximum distance between the front and rear baffles 102 is greater than the length of the cutting board 2, so that the two ends of the cutting board 2 can be placed on the two baffles 102 to cut vegetables and slid along the two strips baffle. The water on the cutting board 2 is directly dripped in the water sink without wetting the countertop. The cutting board 2 includes a cutting board body 201. The cutting board body 201 is made of bamboo, wood or plastic. One side of the cutting board body 201 has an embedded slot 202, and the embedded slot 202 has a panel 203. Grooves 204 are provided on the edges of the two sides of the other side of the cutting board body 201. The grooves 204 are elongated. When the cutting board 2 is inserted into the slot 107, the side having the panel 203 is adjacent to the inner wall of the adjacent water sink body 101, and the side having the groves 204 is away from the inner wall. When the cutting board 2 is to be picked up, it can be picked up by inserting a finger into the grooves 204. It is convenient to pull the cutting board from the slot 107.

The two ends of the embedded slot 202 extend toward the side walls of the cutting board body 201 to form an extension groove 205. Each of the two ends of the panel 203 has a bent portion 206 matched with the extension groove 205. The bent portions 206 at the two ends of the panel 203 are fixed in one-to-one correspondence within the extension grooves 205 at the two ends of the cutting board body 201. The bent portions 206 at both ends of the panel 203 are fixed in the corresponding extension groove 205 by screws. The panel 203 is made of stainless steel or glass. If the cutting board body 201 is not plastic, the panel 203 may be made of plastic.

A handle groove 207 is disposed on one side of the cutting board body 201, and a handle 208 is disposed in the handle groove 207. The handle 208 is a horizontal bar, and the two ends of the horizontal bar are respectively connected to the two side walls of the handle groove 207. The outer side wall of the handle 208 is aligned with the outer side wall of the cutting board body of 201.

The invention also discloses a sink-type washing machine comprising the water sink 1 of the above structure and a washer 3. The water sink 1 is integrated with the washer 3. The water sink body 101 of the water sink 1 is fixedly connected to, *i.e.,* integrally formed with the sink body of the washer 3. The washer 3 is a dishwasher or a fruit and vegetable washing machine.

### 2^{nd} Embodiment:

The invention discloses a water sink 1 comprising a water sink body 101. The water sink 1 of the present embodiment is different from the water sink of the first embodiment in that:
The baffle 102 includes a support rod 103 and connecting portions 104 respectively disposed at each end of the support rod 103. The connecting portions 104 are fixedly connected to the inner wall of the water sink body 101. The connecting portion 104 is perpendicular to the end of the support rod 103. The side of the support rod 103 away from the connecting portion 104 has a protrusion 108, and the protrusion 108 has a triangular cross section. Both ends of the protrusion 108 are formed as triangular slopes 109.

### 3^{rd} Embodiment:

The invention discloses a water sink 1 comprising a water sink body 101. The water sink 1 of the present embodiment is different from the water sink of the first embodiment in that:
The two ends of the baffle 102 are arched surfaces, and the baffle includes a support rod 103 and a connecting portion 104 disposed at an end of the support rod 103. The connecting portion 104 is fixedly connected to the inner wall of the water sink body 101. The connecting portion 104 and the end of the support rod 101 are perpendicular to each other.

### 4^{th} Embodiment:

The invention discloses a water sink 1 comprising a water sink body 101. The water sink 1 of the present embodiment is different from the water sink of the first embodiment in that:
The baffle 102 includes a support rod 103 and a connecting portion 104 respectively disposed at each end of the support rod 103. The connecting portion 104 is fixedly connected to the inner wall of the water sink body 101. A corner 106 is disposed between the end of the support rod 103 and the connecting portion 104. The outer side of the corner 106 is a slope 110, and the inner side of the corner 106 is a right angle.

### 5^{th} Embodiment:

The invention discloses a water sink 1 comprising a water sink body 101. The water sink of this embodiment differs from the water sink of the first embodiment in that:
The baffle 102 includes a support rod 103. Each of the two ends of the support rod 103 adjacent to the side wall of the corresponding inner wall of the water sink body 101 has a connecting portion 104. There is a certain distance between the end faces of the support rods 103. The end faces of both end portions of the support rod 103 are all arched shapes. The connecting portion 104 is detachably connected to the inner wall of the water sink body 101.

The side of the connecting portion 104 disposed near the inner wall of the water sink body 101 has a socket 111. The lower end of the socket 111 has an opening 112. A socket block 113 is disposed at a position corresponding to the socket 111 on the inner wall of the water sink body 101 is located on the inner wall of the water sink body 101. That means the socket block 113 is fixed on the inner wall of the water sink body 101, and a mounting hole 115 is provided on the inner wall of the water sink body 101. A screw 114 is disposed on the socket block 113. The screw 114 passes through the mounting hole 115. The end of the screw 114 is exposed outside the water sink body 101 and is locked through a nut (not shown). A sealing gasket (not shown) is disposed between the socket block 113 and the inner wall of the water sink body 101 and/or between the nut and the outer wall of the water sink body 101. The gasket prevents the mounting hole from a water leakage. The nut and the outer wall of the water sink body 101 may also be waterproofed with waterproof glue to provide waterproofing. The socket block 113 can also be fixed to the inner wall of the water sink body 101 by welding.

The support rod 103 is suspended from the inner wall of the water sink body 101 and the socket 111 is matched with the plug block 113. The cross section of the socket block 113 is in the shape of a dovetail, and the shape of the socket 111 matches the shape of the socket block 113.

### 6^{th} Embodiment:

The invention discloses a water sink 1 comprising a water sink body 101. The water sink 1 of the present embodiment is different from the water sink of the fifth embodiment in that:
The baffle 102 includes a support rod 103. Each of the both ends of the support rod 103 adjacent to the corresponding side wall of the inner wall of the water sink body 101 comprises a connecting portion 104. The connecting portion 104 is fixedly connected to the inner wall of the water sink body 101.

The connecting portion 104 may be welded to the inner wall of the water sink body 101, or it may be locked to the inner wall of the water sink body 101 by screws, or it may be locked on the inner wall of the water sink body 101 by structures like bolts and nuts. These will not be described in detail here.

### 7^{th} Embodiment:

The invention discloses a water sink 1 comprising a water sink body 101. The water sink 1 of the present embodiment is different from the water sink of the first embodiment in that:
The baffle 102 includes a support rod 103, and both ends of the support rod 103 are fixed on the inner wall of the water sink body 101. A gasket 116 is provided between the end of the support rod 103 and the inner walls of the water sink body 101.

The end of the support rod 103 is locked to the inner wall of the water sink body 101 by screws. The fixing structure of the used screw is the same as that of the first embodiment, and details are not described herein.

## Claims

1. A water sink (1), comprising a water sink body (101), wherein
each of two opposite inner walls of the water sink body (101) has a baffle (102), and
both ends of the baffle (102) are fixedly connected to one of said two opposite inner walls of the water sink body, **characterized in that** space (105) is left between the baffle (102) and the corresponding inner wall of the water sink body (101).

2. The water sink (1) of claim 1, wherein a slot (107) for inserting a cutting board (2) is formed between one end or both ends of the baffle (102) and the corresponding side wall respectively side walls of the water sink body (101) adjacent to an end surface of the one end or both ends of the baffle (102)

3. The water sink (1) of claim 1, wherein each of a front inner wall and a rear inner wall of the water sink body (101) comprises the baffle (102) .

4. The water sink (1) of claim 1, wherein both ends of the baffle (102) and the corresponding inner wall of the water sink body (101) are fixedly connected by a connecting portion (104).

5. The water sink (1) of any one of claims 1 to 4, wherein the baffle (102) is in a "U" shape, and both ends of the baffle (102) are respectively fixedly connected to the corresponding inner wall of the water sink body (101) through a locking member at each of these ends.

6. The water sink (1) of claim 5, wherein the baffle (102) comprises a support rod (103) and a connecting portion (104) respectively disposed at each end of the support rod (103), the connecting portion (104) is fixedly connected to the inner wall of the water sink body (101), a corner (106) is formed between each end of the support rod (103) and the corresponding connecting portion (104), the outer side of the corner (106) is a curved surface, and the inner side of the corner (106) is a right angle.

7. The water sink (1) of claim 5, wherein the baffle (102) comprises a support rod (103) and a connecting portion (104) respectively disposed at each end of the support rod (103), the connecting portion (104) is fixedly connected to the inner wall of the water sink body (101), the connecting portion (104) is perpendicular to an end of the support rod (103), the side surface of the support rod (103) away from the connecting portion (104) comprises a protrusion (108), a cross section of the protrusion is in a triangular shape, and each of the both ends of the protrusion (108) has a triangular slope (109).

8. The water sink (1) of claim 5, wherein both ends of the baffle (102) are arched surfaces, the baffle (102) includes a support rod (103) and a connecting portion (104) provided at both ends of the support rod (103), the connecting portion (104) is fixedly connected to the inner wall of the water sink body (101), and the connecting portion (104) is perpendicular to the end of the support rod (103).

9. The water sink (1) of claim 5, wherein the baffle (102) comprises a support rod (103) and a connecting portion (104) respectively disposed at each end of the support rod (103), the connecting portion (104) is fixedly connected to the inner wall of the water sink body (101), a corner (106) is formed between each end of the support rod (103) and the connecting portion (104), the outer side of the corner (106) is a slope (110), and the inner side of the corner (106) is a right angle.

10. The water sink (1) of any one of claims 1 to 4, wherein the baffle (102) comprises a support rod (103), each of the both ends of the support rod (103) adjacent to the corresponding side wall of the inner wall of the water sink body (101) comprises a connecting portion (104), and the connecting portion (104) is detachably connected to the inner wall of the water sink body (101).

11. The water sink (1) of claim 10, wherein the side of the connecting portion (104) disposed near the inner wall of the water sink body (101) has a socket (111), the lower end of the socket (111) has an opening (112), a socket block (113) is disposed at a position on the inner wall of the water sink body (101) corresponding to the socket (111), the support rod (103) is suspended on the inner wall of the water sink body (101), and the socket (111) is matched with the socket block (113).

12. The water sink (1) of claim 11, wherein the socket block (113) has a dovetail shape in cross section, and the socket (111) has a shape that matches the shape of the socket block (113).

13. The water sink (1) of claim 10, wherein each of the both ends of the support rod (103) has a shape of circular arc.

14. The water sink (1) of any one of claims 1 to 4, wherein the baffle (102) comprises a support rod (103), each of the both ends of the support rod (103) adjacent to the corresponding side wall of the inner wall of the water sink body (101) comprises a connecting portion (104), and the connecting portion (104) is fixedly connected to the inner wall of the water sink body (101).

## Patentansprüche

1. Spülbecken (1), umfassend einen Spülbeckenkörper (101), wobei jede von zwei gegenüberliegenden Innenwänden des Spülbeckenkörpers (101) ein Auflageteil (102) aufweist, und beide Enden des Auflageteils (102) fest mit einer der beiden gegenüberliegenden Innenwände des Spülbeckenkörpers verbunden sind, **dadurch gekennzeichnet, dass** Raum (105) zwischen dem Auflageteil (102) und dem entsprechenden Innenwand des Spülbeckenkörpers (101) belassen wird.

2. Spülbecken (1) nach Anspruch 1, wobei ein Schlitz (107) zum Einsetzen eines Schneidbretts (2) zwischen einem Ende oder beiden Enden des Auflageteils (102) und der entsprechenden Seitenwand bzw. den Seitenwänden des Spülbeckenkörpers (101) angrenzend an eine Endfläche des einen Endes oder der beiden Enden des Auflageteils (102) ausgebildet ist.

3. Spülbecken (1) nach Anspruch 1, wobei eine vordere Innenwand und eine hintere Innenwand des Spülbeckenkörpers (101) jeweils das Auflageteil (102) umfassen.

4. Spülbecken (1) nach Anspruch 1, wobei beide Enden des Auflageteils (102) und die entsprechende Innenwand des Spülbeckenkörpers (101) durch einen Verbindungsabschnitt (104) fest verbunden sind.

5. Spülbecken (1) nach einem der Ansprüche 1 bis 4, wobei das Auflageteil (102) eine "U"-Form aufweist und beide Enden des Auflageteils (102) jeweils fest mit der entsprechenden Innenwand des Spülbeckenkörpers (101) durch ein Verriegelungselement an jedem dieser Enden verbunden sind.

6. Spülbecken (1) nach Anspruch 5, wobei das Auflageteil (102) eine Stützstange (103) und einen Verbindungsabschnitt (104) umfasst, die jeweils an jedem Ende der Stützstange (103) angeordnet sind, wobei der Verbindungsabschnitt (104) fest mit der Innenwand des Spülbeckenkörpers (101) verbunden ist, wobei eine Ecke (106) zwischen jedem Ende der Stützstange (103) und dem entsprechenden Verbindungsabschnitt (104) ausgebildet ist, wobei die Außenseite der Ecke (106) eine gekrümmte Oberfläche aufweist und die Innenseite der Ecke (106) ein rechter Winkel ist.

7. Spülbecken (1) nach Anspruch 5, wobei das Auflageteil (102) eine Stützstange (103) und einen Verbindungsabschnitt (104) umfasst, die jeweils an jedem Ende der Stützstange (103) angeordnet sind, wobei der Verbindungsabschnitt (104) fest mit der Innenwand des Spülbeckenkörpers (101) verbunden ist, wobei der Verbindungsabschnitt (104) senkrecht zu einem Ende der Stützstange (103) ist, wobei eine Seite der Stützstange (103), die von dem Verbindungsabschnitt (104) entfernt ist, einen Vorsprung (108) aufweist, wobei ein Querschnitt des Vorsprungs eine dreieckige Form aufweist und jedes der beiden Enden des Vorsprungs (108) eine dreieckige Schräge (109) aufweist.

8. Spülbecken (1) nach Anspruch 5, wobei beide Enden des Auflageteils (102) gewölbte Oberflächen sind, wobei das Auflageteil (102) eine Stützstange (103) und einen Verbindungsabschnitt (104) aufweist, der an beiden Enden der Stützstange (103) vorgesehen ist, wobei der Verbindungsabschnitt (104) fest mit der Innenwand des Spülbeckenkörpers (101) verbunden ist und wobei der Verbindungsabschnitt (104) senkrecht zu dem Ende der Stützstange (103) steht.

9. Spülbecken (1) nach Anspruch 5, wobei das Auflageteil (102) eine Stützstange (103) und einen Verbindungsabschnitt (104) umfasst, die jeweils an jedem Ende der Stützstange (103) angeordnet sind, wobei der Verbindungsabschnitt (104) fest mit der Innenwand des Spülbeckenkörpers (101) verbunden ist, wobei eine Ecke (106) zwischen jedem Ende der Stützstange (103) und dem Verbindungsabschnitt (104) ausgebildet ist, wobei die Außenseite der Ecke (106) eine Schräge (110) aufweist und die Innenseite der Ecke (106) ein rechter Winkel ist.

10. Spülbecken (1) nach einem der Ansprüche 1 bis 4, wobei das Auflageteil (102) eine Stützstange (103) umfasst, wobei jedes der beiden Enden der Stützstange (103), die an die entsprechende Seitenwand der Innenwand des Spülbeckenkörpers (101) angrenzt, einen Verbindungsabschnitt (104) umfasst, und wobei der Verbindungsabschnitt (104) lösbar mit der Innenwand des Spülbeckenkörpers (101) verbunden ist.

11. Spülbecken (1) nach Anspruch 10, wobei die Seite des Verbindungsabschnitts (104), die nahe der Innenwand des Spülbeckenkörpers (101) angeordnet ist, einen Sockel (111) aufweist, wobei das untere Ende des Sockels (111) eine Öffnung (112) aufweist, wobei ein Sockelblock (113) an einer Position an der Innenwand des Spülbeckenkörpers (101) angeordnet ist, die dem Sockel (111) entspricht, wobei die Stützstange (103) an der Innenwand des Spülbeckenkörpers (101) aufgehängt ist und der Sockel (111) mit dem Sockelblock (113) zusammenpasst.

12. Spülbecken (1) nach Anspruch 11, wobei der Sockelblock (113) im Querschnitt eine Schwalbenschwanzform aufweist und der Sockel (111) eine Form hat, die der Form des Sockelblocks (113) entspricht.

13. Spülbecken (1) nach Anspruch 10, wobei jedes der beiden Enden der Stützstange (103) eine Kreisbogenform aufweist.

14. Spülbecken (1) nach einem der Ansprüche 1 bis 4, wobei das Auflageteil (102) eine Stützstange (103) umfasst, wobei jedes der beiden Enden der Stützstange (103), die an die entsprechende Seitenwand der entsprechenden Innenwand des Spülbeckenkörpers (101) angrenzt, einen Verbindungsabschnitt (104) umfasst und wobei der Verbindungsabschnitt (104) fest mit der Innenwand des Spülbeckenkörpers (101) verbunden ist.

## Revendications

1. Un évier (1) comprenant un corps d'évier (101), chacune des deux parois internes opposées du corps d'évier (101) ayant une partie de support (102), les deux extrémités de la partie de support (102) étant fermement reliées à l'une des deux parois internes opposées du corps d'évier, **caractérisé en ce qu'**un espace (105) est laissé entre la partie de support (102) et la paroi interne correspondante du corps d'évier (101).

2. L'évier (1) selon la revendication 1, dans lequel une fente (107) pour l'insertion d'une planche à découper (2) est formée entre une extrémité ou les deux extrémités de la partie de support (102) et la ou les parois latérales correspondantes du corps d'évier (101) adjacentes à une face d'extrémité de ladite une extrémité ou desdites deux extrémités de la partie de support (102).

3. L'évier (1) selon la revendication 1, dans lequel une paroi intérieure avant et une paroi intérieure arrière du corps d'évier (101) comprennent chacune la partie de support (102).

4. L'évier (1) selon la revendication 1, dans lequel les deux extrémités de la partie de support (102) et la paroi interne correspondante du corps d'évier (101) sont solidarisées par une partie de connexion (104).

5. L'évier (1) selon l'une quelconque des revendications 1 à 4, dans lequel la partie de support (102) présente une forme en "U" et les deux extrémités de la partie de support (102) sont chacune solidaires de la paroi interne correspondante du corps d'évier (101) par un élément de verrouillage à chacune de ces extrémités.

6. L'évier (1) selon la revendication 5, dans lequel la partie de support (102) comprend une tige de support (103) et une partie de connexion (104) disposées respectivement à chaque extrémité de la tige de support (103), la partie de connexion (104) étant solidaire de la paroi interne du corps d'évier (101), un coin (106) étant formé entre chaque extrémité de la tige de support (103) et la partie de connexion (104) correspondante, l'extérieur du coin (106) ayant une surface courbe et l'intérieur du coin (106) étant un angle droit.

7. L'évier (1) selon la revendication 5, dans lequel la pièce d'appui (102) comprend une tige de support (103) et une partie de connexion (104) disposées respectivement à chaque extrémité de la tige de support (103), la partie de connexion (104) étant solidaire de la paroi interne du corps d'évier (101), dans lequel la partie de connexion (104) est perpendiculaire à une extrémité de la tige de support (103), dans lequel un côté de la tige de support (103) éloigné de la partie de connexion (104) comprend une saillie (108), dans lequel une section transversale de la saillie a une forme triangulaire et chacune des deux extrémités de la saillie (108) comprend une pente triangulaire (109).

8. L'évier (1) selon la revendication 5, dans lequel les deux extrémités de la partie de support (102) sont des surfaces bombées, dans lequel la partie de support (102) comprend une tige de support (103) et une partie de connexion (104) prévue aux deux extrémités de la tige de support (103), dans lequel la partie de connexion (104) est connectée de manière fixe à la paroi interne du corps d'évier (101) et dans lequel la partie de connexion (104) est perpendiculaire à l'extrémité de la tige de support (103).

9. L'évier (1) selon la revendication 5, dans lequel l'élément de support (102) comprend une tige de support (103) et une partie de connexion (104) disposées respectivement à chaque extrémité de la tige de support (103), la partie de connexion (104) étant connectée de manière fixe à la paroi interne du corps d'évier (101), dans lequel un coin (106) est formé entre chaque extrémité de la tige de support (103) et la partie de connexion (104), le côté extérieur du coin (106) ayant une pente (110) et le côté intérieur du coin (106) étant un angle droit.

10. L'évier (1) selon l'une quelconque des revendications 1 à 4, dans lequel la partie de support (102) comprend une tige de support (103), dans lequel chacune des deux extrémités de la tige de support (103) adjacente à la paroi latérale correspondante de la paroi interne du corps d'évier (101) comprend une partie de connexion (104), et dans lequel la partie de connexion (104) est connectée de manière amovible à la paroi interne du corps d'évier (101).

11. L'évier (1) selon la revendication 10, dans lequel le côté de la partie de connexion (104) qui est situé à proximité de la paroi interne du corps d'évier (101) comprend un socle (111), l'extrémité inférieure du socle (111) comprenant une ouverture (112), dans lequel un bloc de socle (113) est disposé à une position sur la paroi intérieure du corps d'évier (101) qui correspond au socle (111), la tige de support (103) étant suspendue à la paroi intérieure du corps d'évier (101) et le socle (111) s'adaptant au bloc de socle (113).

12. L'évier (1) selon la revendication 11, dans lequel le bloc de socle (113) a une section transversale en forme de queue d'aronde et le socle (111) a une forme qui correspond à la forme du bloc de socle (113).

13. L'évier (1) selon la revendication 10, dans lequel chacune des deux extrémités de la tige de support (103) présente une forme d'arc de cercle.

14. L'évier (1) selon l'une quelconque des revendications 1 à 4, dans lequel la partie de support (102) comprend une tige de support (103), dans lequel chacune des deux extrémités de la tige de support (103) adjacentes à la paroi latérale correspondante de la paroi interne correspondante du corps d'évier (101) comprend une partie de connexion (104), et dans lequel la partie de connexion (104) est solidaire de la paroi interne du corps d'évier (101).
